# EUROPEAN PATENT SPECIFICATION

(11) **EP 2 794 287 B1**
(45) Date of publication and mention of the grant of the patent: **28.10.2015**
(21) Application number: 12820917.8
(22) Date of filing: 17.12.2012
(51) Int. Cl.: B60C 1/00, C08K 3/36, C08L 21/00, C08L 9/00, C08K 3/04, C08L 97/02

(54) **WINTER TYRE**
WINTERREIFEN
PNEU D'HIVER

(30) Priority: 20.12.2011 IT MI20112320
(43) Date of publication of application: 29.10.2014
(73) Proprietor: Pirelli Tyre S.p.A., 20126 Milano (IT)
(72) Inventor: NAHMIAS NANNI, Marco, I-20126 Milano (IT); RATTI, Giuseppina, I-20126 Milano (IT); PARAZZOLI, Francesco, I-20126 Milano (IT)
(74) Representative: Allaix, Roberto
(86) International application number: PCT/IB2012/057366
(87) International publication number: WO 2013/093752

(56) References cited:
- EP-A1- 0 942 041
- CN-A- 102 219 931
- JP-A- 2011 068 784
- KR-A- 20020 024 612
- KR-A- 20020 044 256
- KR-A- 20020 076 061
- KR-A- 20040 102 604

## Description

### FIELD OF THE INVENTION

The present invention relates to a winter tyre for vehicle wheels, in particular a tyre suitable for driving on icy roads.

### PRIOR ART

Patent applications JP 2002-060553, EP 0 942 041, KR 2004-0102604 face the problem of providing tyres capable of delivering high performance on icy roads.

Patent application KR2002-0044256 describes an elastomeric composition for treads of tyres for heavy vehicles (lorries, buses) comprising white rice husk ash as reinforcing filler together with carbon black, where the white rice husk ash was ground in a ball mill to obtain a particle size of less than 10 µm.

### SUMMARY OF THE INVENTION

The problem of obtaining good tyre performance on ice is critical in countries where the roads are covered with ice for long periods in winter, but the road traffic laws do not allow the use of spike tyres, typically considered particularly effective for performance on icy roads.

The Applicant faced the problem of performance and safety of winter tyres suitable for driving on icy roads.

The Applicant observed that a problem to be overcome in the production of winter tyres, in particular of tyres for which high performance on ice is required, is not linked solely to the problem of finding a substitute for spikes.

As observed by the Applicant, there may be a problem of finding a balance between the requirement of tyre performance and the characteristics of the materials used in the elastomer compounds, in particular for treads, to provide the desired performance on ice, in particular the performance in traction and braking.

According to the Applicant, such materials should have good dispersibility and should be compatible with the other components of the compound.

According to the Applicant, such materials should give the tread good resistance to wear and abrasion.

The Applicant has now found that rice husk ash added to the compositions of the compounds for winter tyres makes it possible to overcome the problems described above.

Rice husk ash is a material obtained as a result of combustion of rice husks. During combustion, the organic components burn and the resultant rice husk ash consists almost completely of silica.

The Applicant has found that rice husk ash can advantageously be added to the compound used for production of a tyre tread to obtain a microspike effect on the tyre tread, improving its performance in traction, braking and handling on ice.

The Applicant thinks that the microspike effect is due to the presence, in the finished tyre tread, of a finite number of coarse particles of rice husk ash and/or of silica from rice husk ash.

The Applicant has found, moreover, that rice husk ash can easily be dispersed in the compound, even though it has no organic components, such as cellulose or cellulose derivatives.

Advantageously, the Applicant has found that adding rice husk ash to the compound does not impair other important characteristics of the tyre, such as for example resistance to wear and abrasion.

Surprisingly, the Applicant observed that adding rice husk ash, despite having a certain reinforcing effect on the tyre, does not impair performance on icy roads.

In a first aspect, the present invention relates to a tyre for vehicle wheels, comprising a tread band applied in a radially outer position,
said tread band comprising a crosslinked elastomeric composition comprising a finite number of coarse particles of rice husk ash and/or of silica from rice husk ash.

Preferably, said tread band comprises a crosslinked elastomeric composition comprising particles of rice husk ash and/or of silica from rice husk ash having maximum size greater than 10 µm and surface distribution greater than 10 particles per mm² of solid surface of tread band.

Preferably, said tread band comprises a crosslinked elastomeric composition comprising particles of rice husk ash and/or of silica from rice husk ash having maximum size greater than 10 µm and surface distribution greater than 20 particles per mm² of solid surface of tread band.

Preferably, said tread band comprises a crosslinked elastomeric composition comprising particles of rice husk ash and/or of silica from rice husk ash having maximum size greater than 10 µm and less than or equal to 100 µm and surface distribution greater than 20 particles per mm² of solid surface of tread band.

Preferably, said tread band comprises a crosslinked elastomeric composition comprising particles of rice husk ash and/or of silica from rice husk ash having maximum size greater than 10 µm and surface distribution greater than 30 particles per mm² of solid surface of tread band.

Preferably, said tread band comprises a crosslinked elastomeric composition comprising particles of rice husk ash and/or of silica from rice husk ash having maximum size greater than 10 µm and less than or equal to 100 µm and surface distribution of said particles greater than 30 particles per mm² of solid surface of tread band.

Preferably, said tread band comprises a crosslinked elastomeric composition comprising particles of rice husk ash and/or of silica from rice husk ash having maximum size greater than 20 µm and surface distribution greater than 10 particles per mm² of solid surface of tread band.

Preferably, said tread band comprises a crosslinked elastomeric composition comprising particles of rice husk ash and/or of silica from rice husk ash having maximum size greater than 20 µm and less than or equal to 100 µm and surface distribution greater than 10 particles per mm² of solid surface of tread band.

Preferably, said tread band comprises a crosslinked elastomeric composition comprising particles of rice husk ash and/or of silica from rice husk ash having maximum size greater than 20 µm and surface distribution greater than 15 particles per mm² of solid surface of tread band.

Preferably, said tread band comprises a crosslinked elastomeric composition comprising particles of rice husk ash and/or of silica from rice husk ash having maximum size greater than 20 µm and less than or equal to 100 µm and surface distribution greater than 15 particles per mm² of solid surface of tread band.

Preferably, said particles of rice husk ash and/or of silica from rice husk ash have maximum size below 500 µm. More preferably, said particles have maximum size below 300 µm.

The expression "maximum size" refers to the maximum dimension of the cross section of a particle of rice husk ash and/or of silica from rice husk ash, visible by a microscopic technique (for example SEM microscopy) on the solid surface of a sample of tread, and measured by software assisted measurement techniques of particle.

The expression "solid surface of tread" refers to a portion of rubber surface of tread without interruptions due to grooves, blocks or sipes typically present in treads for winter tyres.

Preferably, the elastomeric composition of the tread band comprises rice husk ash and/or silica from rice husk ash in amount greater than 5 phr, more preferably greater than 8 phr.

Preferably, the elastomeric composition of the tread band comprises rice husk ash and/or silica from rice husk ash in amount of less than 40 phr, more preferably less than 20 phr.

Advantageously, the elastomeric composition of the tread band comprises rice husk ash and/or silica from rice husk ash in amount from 10 phr to 15 phr.

The term "phr" indicates parts by weight of a particular component of the elastomeric material per 100 parts by weight of diene elastomeric polymer.

Rice husk is the waste that results from the dehulling of rice that is still raw after threshing.

It is a material that is very rich in cellulose and is often used as fuel in cogeneration plants within rice mills. The combustion of rice husk requires accurately designed equipment since the high ash content can cause incomplete combustion.

The rice husk ash obtained as a result of combustion mainly contains silica (at least 80 wt%). Components present in minor amounts are carbon (less than 5 wt%) and oxides of metals such as aluminium, iron, calcium, manganese, barium, copper, zinc, magnesium, phosphorus, potassium and titanium.

For disposal of rice husk ash, its use in various industrial processes has been investigated, for example in cement manufacture, for production of refractories for the iron and steel industry, as parting powder in steelworks, as absorbent for oils in the chemical industry, as release agent in the ceramics industry, and as insulating material in buildings.

The rice husk ash and/or silica from rice husk ash used in the present invention, prior to mixing, is in the form of particles with average size above 50 µm. More preferably said particles have average size greater than or equal to 100 µm.

Preferably, said particles of rice husk ash and/or silica from rice husk ash, prior to mixing, have average size below 3000 µm. More preferably, said particles have average size below 2000 µm.

Preferably, said particles of rice husk ash and/or of silica from rice husk ash, prior to mixing, have average size between 400 µm and 1000 µm, More preferably, said particles have average size between 600 µm and 800 µm.

The expression "average size" refers to the size of the fraction of particles of rice husk ash and/or of silica from rice husk ash predominantly present in the particle size distribution, measured for example by laser scattering.

The size distribution and average sizes of the particles of rice husk ash and/or of silica from rice husk ash before mixing can be analysed using, for example, the light-scattering particle size distribution analyser LA-950 (Horiba).

Preferably, the rice husk ash and/or silica from rice husk ash is added to the crosslinkable elastomeric composition for the tread band during the step of mixing of the materials of which it is constituted.

During the mixing step, the particles of rice husk ash and/or of silica from rice husk ash undergo partial disintegration, giving particles having the desired dimensions in the finished tyre.

A person skilled in the art can determine the most suitable conditions for controlling said mixing step, in order to obtain particles of rice husk ash and/or of silica from rice husk ash having the maximum desired dimensions in the finished tyre.

Advantageously, the rice husk ash usable in the present invention has a silica content above 80 wt%.

Advantageously, said rice husk ash is substantially free from organic compounds, such as cellulose and/or cellulose derivatives.

The tyre according to the present invention comprises at least one tread band obtained by crosslinking a crosslinkable elastomeric composition comprising at least one diene elastomeric material.

According to a preferred embodiment of the present invention, the elastomeric polymer is a diene polymer that can be selected from those commonly used in elastomeric materials crosslinkable with sulphur, which are particularly suitable for making tyres, i.e. from elastomeric polymers or copolymers with an unsaturated chain having a glass transition temperature (Tg) generally below 20°C, preferably in the range from 0°C to -110°C. These polymers or copolymers can be of natural origin or can be obtained by solution polymerization, emulsion polymerization or gas-phase polymerization of one or more conjugated diolefins, optionally mixed with at least one comonomer selected from monovinyl arenes and/or polar comonomers in an amount not above 60 wt%.

For tyres for driving on icy roads, tread bands are particularly preferred comprising at least one elastomeric composition comprising at least:
(a) an amount greater than or equal to 30 phr of an elastomeric polymer selected for example from natural rubber, polybutadiene, polyisoprene, polychloroprene, polynorbornene, optionally halogenated isoprene-isobutene copolymers, butadiene-acrylonitrile copolymers, styrene-butadiene-isoprene terpolymers and ethylene-propylene-diene terpolymers. Preferably, polymer (a) is natural rubber (NR).
(b) at least 30 phr of at least one homopolymer of 1,3-butadiene (BR) (also stated as "polybutadiene" or "1,4-polybutadiene").

Preferably the amount of polymer (a) is between about 30 phr and about 70 phr.

Preferably the amount of polymer (b) is between about 30 phr and about 60 phr.

Preferably the elastomeric composition for tread bands further comprises:
(c) not more than 20 phr of at least one styrene/1,3-butadiene copolymer (SBR).

The amounts of the polymeric components are expressed relative to the dry components, i.e. without any extender oil. The polymeric components, in particular BR and SBR, generally have an extender oil added to improve their processability (typically 37.5 phr of extender oil per 100 phr of dry elastomeric polymer). The polymeric components with extender oil added are commonly called "oil-extended".

According to a particularly preferred aspect the elastomeric material used for making the tread band for tyres for driving on icy roads has a glass transition temperature (Tg) below -30°C.

According to another preferred aspect of the invention, the basic elastomeric composition described above comprises at least one reinforcing filler, the total amount of which can generally vary from 40 to 120 phr. The reinforcing filler can be selected from those commonly used in this industry and, for example and preferably, comprises at least one of the following products: carbon black, alumina, silica, aluminosilicates, calcium carbonate, kaolin and the like or mixtures thereof.

The silica that can be used can be for example a pyrogenic silica or, preferably, a precipitated silica, having a BET surface area (measured according to standard ISO 5794/1) generally between 50 and 300 m²/g.

The types of carbon black used conventionally in this industry and usable for carrying out the invention comprise those designated on the basis of ASTM standards with the symbols N110, N121, N220, N231, N234, N236, N239, N242, N299, N315, N330, N332, N339, N347, N351, N358, N375.

In the case when the reinforcing filler comprises silica, the elastomeric composition used for making the tread band of the tyre of the invention can further incorporate at least one binder agent capable of interacting with the silica and binding it to the base polymeric material during vulcanization of the latter.

Said crosslinkable elastomeric composition preferably further comprises at least one silane coupling agent.

According to a preferred embodiment, the silane coupling agent that can be used in the present invention can be selected from those having at least one hydrolysable silane group, which can be identified, for example, by the following general formula (II):

(R)₃Si-CₙH₂ₙ-X (II)

where the groups R, which may be identical or different, are selected from: alkyl, alkoxy or aryloxy groups or from halogen atoms, provided that at least one of the groups R is an alkoxy or aryloxy group; n is an integer between 1 and 6 inclusive; X is a group selected from: nitroso, mercapto, amino, epoxide, vinyl, imide, chloro, -(S)ₘCₙH₂ₙ-Si-(R)₃ or -S-COR, where m and n are integers between 1 and 6 inclusive and the groups R are as defined above.

Among the silane coupling agents, those particularly preferred are bis(3-triethoxysilylpropyl) tetrasulphide (Si69) and bis(3-triethoxysilylpropyl) disulphide. Said coupling agents can be used as such, or as a suitable mixture with an inert filler (for example carbon black) in order to facilitate their incorporation in the elastomeric material.

According to a preferred embodiment, said silane coupling agent is present in the elastomeric material in an amount between 0.01 phr and 10 phr, preferably between 0.5 phr and 5 phr.

The elastomeric compositions can be vulcanized by the known techniques, in particular with vulcanizing systems based on sulphur commonly used for diene elastomeric polymers. For this purpose, in the elastomeric compositions, after one or more steps of thermomechanical treatment, a sulphur-based vulcanizing agent is incorporated together with vulcanization accelerators. In the final treatment step, the temperature is generally kept below 120°C and preferably below 100°C, in order to avoid any undesirable scorch effect.

The vulcanizing agent used most advantageously is sulphur, or molecules containing sulphur (sulphur donors), with activators and accelerators known by a person skilled in the art.

The activators that are particularly effective are zinc compounds and in particular ZnO, ZnCO₃, zinc salts of saturated or unsaturated fatty acids containing from 8 to 18 carbon atoms, such as, for example zinc stearate, which are preferably formed *in situ* in the elastomeric composition from ZnO and fatty acid, as well as BiO, PbO, Pb₃O₄, PbO₂, or mixtures thereof.

The accelerators that are commonly used can be selected from: dithiocarbamates, guanidine, thiourea, thiazoles, sulphenamides, thiurams, amines, xanthates or mixtures thereof.

Said elastomeric compositions can comprise other commonly used additives, selected on the basis of the specific application for which the composition is intended. For example, the following can be added to said materials: antioxidants, anti-ageing agents, plasticizers, adhesives, anti-ozone agents, modifying resins, or mixtures thereof.

In particular, for the purpose of further improving processability, a plasticizer can be added to said elastomeric composition, generally selected from mineral oils, vegetable oils, synthetic oils or mixtures thereof, such as, for example, aromatic oil, naphthenic oil, phthalates, soya oil or mixtures thereof. The amount of plasticizer is generally between 0 phr and 70 phr, preferably between 3 phr and 20 phr.

The elastomeric compositions described above can be prepared by mixing together the polymeric components with the reinforcing filler and with the other additives optionally present, by the methods known by a person skilled in the art. The mixing can be carried out, for example, using an open mixer of the "open-mill" type or an internal mixer of the type with tangential rotors (Banbury™) or with interblocking rotors (Intermix^{®}), or in continuous mixers of the Ko-Kneader™ type or of the twin-screw or multiscrew type.

Further features and advantages will become clearer from the detailed description of a preferred, but not exclusive, embodiment of a winter tyre for vehicle wheels, according to the present invention.

### DESCRIPTION OF THE DRAWINGS

This description will be presented below referring to the drawings, supplied purely for illustrative, and therefore non-limiting, purposes, in which:
- Fig. 1 shows, in radial half section, a tyre for vehicle wheels;
- Fig. 2 shows a photograph of a portion of comparative tyre tread comprising silica;
- Fig. 3 shows a photograph of a portion of the tyre tread according to the present invention comprising rice husk ash.

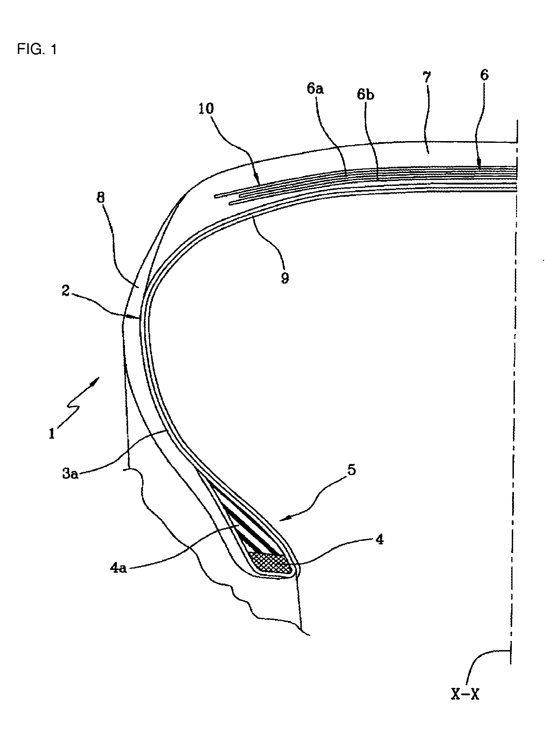

In Fig. 1, the reference number 1 indicates a tyre for vehicle wheels, which generally comprises a carcass structure 2 comprising at least one carcass ply 3a having respectively opposite terminal edges engaged with respective annular anchoring structures 4, optionally associated with elastomeric fillers 4a, integrated in zones 5 usually identified with the name "beads".

The carcass structure 2 is joined to a belt structure 6 comprising one or more belt layers 6a, 6b arranged radially superimposed with respect to one another and with respect to the carcass ply 3a, having reinforcing cords, typically metallic. These reinforcing cords can have crossed orientation relative to a circumferential direction of development of the tyre 1. "Circumferential" direction means a direction generally aligned in the direction of rotation of the tyre, or alternatively slightly inclined relative to the direction of rotation of the tyre.

The belt structure 6 further comprises at least one radially outer reinforcing layer 10 relative to the belt layers 6a, 6b. The radially outer reinforcing layer 10 comprises cords, typically textile, arranged at a substantially zero angle relative to the circumferential direction of development of the tyre and embedded in the elastomeric material. Preferably, the textile cords are arranged substantially parallel and side by side to form a plurality of spirals. These spirals are substantially oriented in the circumferential direction (typically with an angle between 0° and 5°), this direction usually being said to be "at zero degrees" with reference to its disposition relative to the equatorial plane X-X of the tyre. "Equatorial plane" of the tyre means a plane perpendicular to the axis of rotation of the tyre and that divides the tyre into two symmetrically identical parts.

In a radially outer position relative to the belt structure 6, a tread band 7 is applied, of elastomer compound, like the other semifinished product components of the tyre 1. On the running surface of the tread band 7, which for simplicity is shown smooth in Fig. 1, particularly wide circumferential grooves are generally made (width of the grooves near the surface of the tread greater than 6-8 mm), connected by transverse grooves (said grooves being called "tread void") so as to define a plurality of blocks (said blocks being defined as "solid surface of tread band") of various shapes and dimensions distributed on the running surface.

The tread band of the tyre intended for use on icy roads according to the invention has a tread pattern comprising longitudinal and/or transverse grooves, which form a plurality of blocks where they meet.

The blocks can be furrowed with carvings or sipes of width less than about 2 mm arranged in circumferential and/or transverse and/or oblique direction and/or combinations of the aforementioned directions. These sipes, provided for example to increase the mobility of the block itself for the purpose of improving the bite, grip and heating of the tread compound during rolling on surfaces at low temperature, can go across the surface of the block completely - from one groove to another opposite or adjacent - or partially.

The tread band 7 is preferably made with the elastomeric materials described above that comprise a finite number of particles of rice husk ash and/or of silica from rice husk ash of coarse size.

Preferably, the tread band 7 comprises a crosslinked elastomeric composition comprising particles of rice husk ash and/or of silica from rice husk ash having maximum size greater than 10 µm and surface distribution greater than 10 particles per mm² of solid surface of tread band.

Moreover, respective sidewalls 8 of elastomer compounds are applied in an axially outer position on the lateral surfaces of the carcass structure 2, each extending from one of the lateral edges of the tread band 7 up to the respective annular structure for anchorage to the beads 5.

A radially inner surface of the tyre 1 is moreover preferably coated internally with a layer of elastomeric material that is substantially impermeable to air or so-called liner 9.

The tyre 1 as described above is manufactured by assembling respective semifinished products on at least one building drum, not shown, by means of at least one assembling device.

The tyre 1 described above is manufactured by assembling the components on one or more building drums.

For example, equipment for making the tyre 1 comprises a carcass manufacturing line, corresponding to which building drums are moved between various stations for supplying semifinished products pre-arranged for forming, on each building drum, a carcass sleeve comprising: liner 9, carcass structure 2, annular anchoring structures 4 and optionally at least one part of the sidewalls 8. Simultaneously, in a line for manufacture of outer sleeves, one or more auxiliary drums are moved sequentially between various work stations pre-arranged to form, on each auxiliary drum, an outer sleeve, comprising at least the belt structure 6, the tread band 7, and optionally at least one part of the sidewalls 8. The equipment further comprises an assembly station, corresponding to which the outer sleeve is joined to the carcass sleeve.

After manufacture of the raw tyre 1, a treatment of moulding and vulcanization is carried out for determining the structural stabilization of the tyre 1 by crosslinking the elastomer compounds as well as impressing a desired tread pattern on the tread band 7 and for printing any distinctive graphical designs on the sidewalls 8.

The present invention will be further illustrated below with a number of examples of preparation, which are supplied purely as a guide and without any limitation of this invention.

### EXAMPLE 1

The elastomeric materials given in Table 1 were prepared as follows (the amounts of the various components are stated in phr).

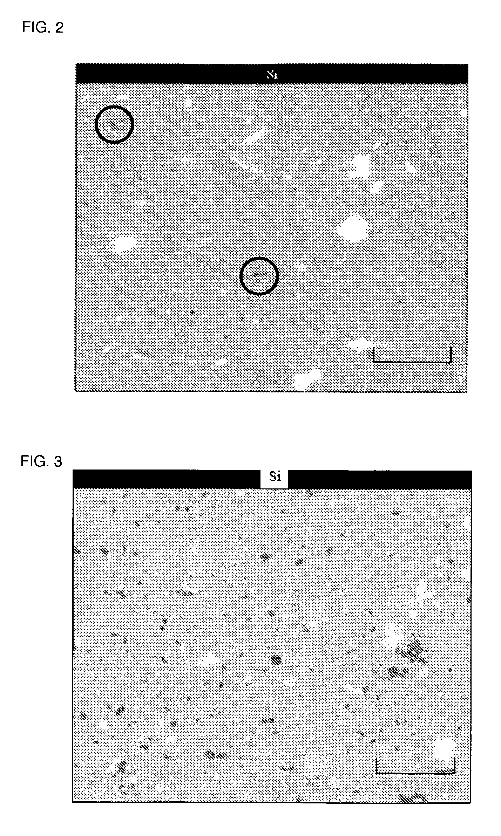

All the components, except sulphur and accelerators, were mixed in an internal mixer (model Pomini PL 1.6) for about 5 minutes (step 1), maintaining the temperature in the range 145 ± 5°C until discharge. The Applicant had observed that mixing carried out according to the aforementioned parameters made it possible to reduce the particle size of the rice husk ash to the desired dimensions (Fig. 3). The sulphur and accelerators 1 and 2 were added and mixing was carried out in an open roll mixer (step 2).

**TABLE 1**

| SAMPLE | 1 (*) | 2 |
|---|---|---|
| Step 1 | | |
| BR (**) | 63 | 63 |
| NR | 43 | 43 |
| SBR (**) | 15.50 | 15.50 |
| CB | 9.5 | 9.5 |
| Silica | 44 | 41 |
| Rice husk ash | - | 10 |
| Antioxidant | 2.40 | 2.40 |
| Wax | 1.50 | 1.50 |
| Oil | 4.50 | 4.50 |
| Adhesive resin 1 | 5.00 | 5.00 |
| Adhesive resin 2 | 1.00 | 1.00 |
| Stearic acid | 2.50 | 2.50 |
| Zinc oxide | 2.20 | 2.20 |
| Silane | 3.35 | 3.35 |

| Step 2 | | |
|---|---|---|
| Sulphur | 1.45 | 1.45 |
| Accelerant 1 | 1.45 | 1.45 |
| Accelerant 2 | 0.20 | 0.20 |

| | | |
|---|---|---|
| (*): comparison (**): polymers extended with 37.5 phr of oil per 100 phr of dry elastomeric polymer | | |

- BR:: butadiene rubber, CB 29 MES, product from Lanxess
- NR:: natural rubber, STR 20
- SBR: styrene-butadiene rubber, SLR 4630, product from Styron
- CB:: carbon black N234, product from Columbian
- Silica:: Silica Ultrasil 7000 GR, product from Evonik
- Rice Husk Ash (RHA),: product from Curti Riso
- Accelerant 1:: CBS, product from Lanxess
- Accelerant 2:: DPG 80, product from Rhein-Chemie
- Antioxidant:: 6PPD, N-(1,3-dimethylbutyl)-N'-phenyl-p-phenylenediamine, product from Flexsys
- Wax:: product from Repsol
- Oil:: MES, product from H&R
- Sulphur:: product from Zolfoindustria
- Adhesive resin 1:: aliphatic adhesive resin, product from Eastman
- Adhesive resin 2:: octylphenolic adhesive resin, product from SI Group
- Stearic acid:: product from Undesa
- Zinc oxide:: product from Rhein-Chemie
- Silane:: SI 69, product from Evonik

The static mechanical properties according to standard ISO 37:2005 were measured at different elongations (100%, 300%) on samples of the aforementioned elastomeric materials, vulcanized at 170°C for 10 minutes. The tensile tests were carried out on ring specimens. The results obtained are shown in Table 2.

Table 2 also shows the dynamic mechanical properties, measured using an Instron dynamic tester in tension-compression conditions according to the following methods. A test piece of the crosslinked elastomeric material of cylindrical shape (length = 25 mm; diameter = 12 mm), preloaded in compression to a longitudinal strain of 10% relative to the initial length and maintained at the specified temperature (23°C or 70°C) throughout the test, was subjected to a dynamic sinusoidal stress having an amplitude of ± 3.3% relative to the length under pre-load, at a frequency of 100 Hz. The dynamic mechanical properties are expressed in terms of values of dynamic elastic modulus (E') and Tan delta (loss factor). The Tan delta value was calculated as the ratio of the viscous dynamic modulus (E") to the dynamic elastic modulus (E'), both being determined with the aforementioned dynamic measurements.

The hardness in degrees IRHD (at -10°C and 0°C) was measured according to standard ISO 48:2007, on samples of the aforementioned elastomeric materials, vulcanized at 170°C for 10 minutes.

The DIN abrasion value was measured according to standard ISO 4649:2002, using a vertical load reduced from 10 N to 5 N.

The values given in the following Table 2 were normalized to the comparison sample 1.

Finally, Table 2 shows the surface distribution of the particles of rice husk ash in the tread of the tyres obtained with the elastomeric materials as described in example 1.

From each of the treads - not run-in, to avoid contamination with external agents - square specimens were obtained, having a side of 2.5 mm and thickness between 0.5 and 6 mm. A Leica LN 20 microtome with a cryogenic unit was used for preparing the samples. The images were obtained with a Leica DM 4000 microscope with analogue camera.

On these test specimens, having an area of 6.25 mm², all the particles were counted, using the automated image analysis technique AIA (Automated Image Analysis) with the support of the image analysis software Image-Pro^{®} plus of Media Cybernetics, Inc.

The results, presented in the following Table 2, show the surface distribution of the particles, having the maximum size stated, per square millimetre of test specimen.

Dimensions and distribution of particles introduced in the elastomeric materials of the tread of the comparative tyre and according to the invention were evaluated.

Fig. 2 shows a photograph, obtained with a scanning electron microscope (SEM) and 50X magnification, of a portion of the tyre tread obtained using sample 1 (comparison) comprising silica, according to example 1.

Fig. 3 shows a photograph, obtained with a scanning electron microscope (SEM) and 50X magnification, of a portion of tyre tread, obtained using sample 2 (according to the present invention) comprising rice husk ash, according to example 1.

The photographs in Figs. 2 and 3 were obtained on square specimens, having a side of 2.5 mm and thickness between 0.5 mm and 6 mm, obtained from treads that were not run-in, to avoid contamination with external agents. A microtome Leica LN 20 with cryogenic unit was used for preparing the samples. The images were obtained with a Leica DM 4000 microscope with analogue camera.

The photographs in Figs. 2 and 3 show the mapping of silica: dark zones correspond to the zones of the compound in which silica is present, whereas the white zones correspond to the zones of the compound in which silica is not present.

More particularly, the photograph in Fig. 2, obtained on a specimen of a comparison tread, i.e. without rice husk ash, shows that the silica is dispersed in the compound uniformly: the dark zones, in which the silica is dispersed homogeneously, predominate relative to the white zones. Moreover, only a few silica particles not completely dispersed are present (for example, those circled with dimensions of about 50 µm).

In contrast, the photograph in Fig. 3, obtained on a specimen of a tread of a tyre according to the present invention, shows that the particles of rice husk ash having maximum size respectively greater than 10 µm or 20 µm, are numerous and are present on the whole surface of the tread.

**TABLE 2**

| SAMPLE | 1 (*) | 2 |
|---|---|---|
| STATIC MECHANICAL PROPERTIES | | |
| Modulus 100% (MPa) | 100 | 107 |
| Modulus 300% (MPa) | 100 | 100 |

| HARDNESS | | |
|---|---|---|
| IRHD at -10°C | 100 | 103 |
| IRHD at 0°C | 100 | 102 |

| DYNAMIC MECHANICAL PROPERTIES | | |
|---|---|---|
| E' (-10°C) | 100 | 106 |
| E' (0°C) | 100 | 100 |
| Tan delta (-10°C) | 100 | 102 |
| Tan delta (0°C) | 100 | 97 |
| DIN abrasion (0.5 N) | 100 | 102 |

| SURFACE DISTRIBUTION | | |
|---|---|---|
| <10µm | 7 | 16 |
| 10-20 µm | 5 | 26 |
| > 20 µm | 2 | 20 |

As can be seen from the table, sample 2 had a higher hardness value (IRHD), measured both at 0°C and at -10°C, than comparison sample 1.

Apparently this seemed disadvantageous since it is known that a compound suitable for tyres for use on ice must be as soft as possible. In this case, however, the increase in hardness (IRHD) of the compound was reflected in a reinforcing effect for the finished tyre, without adversely affecting tyre performance on ice.

The hysteresis (measured with tan delta) of sample 2 was higher than that of the comparison sample 1, especially at the lower temperature.

The DIN abrasion value, taking into account the variability of measurement (±10%), was considered equivalent.

Finally, the data showed that particles of rice husk ash having maximum size greater than 10 µm had a notably higher surface distribution in the tyre obtained with sample 2 according to the present invention.

### EXAMPLE 2

All the components, except sulphur and accelerators, were mixed in an internal mixer (model Pomini PL 1.6) for about 5 minutes (step 1), maintaining the temperature in the range 145 ± 5°C until discharge. The sulphur and accelerators 1 and 2 were added and mixing was carried out in an open rollmixer (step 2).

**TABLE 3**

| SAMPLE | 3 (*) | 4 |
|---|---|---|
| Step 1 | | |
| BR (**) | 63 | 63 |
| NR | 43 | 43 |
| SBR (**) | 15.50 | 15.50 |
| CB | 31.50 | 31.50 |
| Silica | 16.20 | 13.20 |
| Rice husk ash | - | 10.00 |
| Antioxidant | 2.40 | 2.40 |
| Wax | 1.50 | 1.50 |
| Adhesive resin 1 | 5.00 | 5.00 |
| Adhesive resin 2 | 1.00 | 1.00 |
| Stearic acid | 2.50 | 2.50 |
| Zinc oxide | 2.20 | 2.20 |
| Silane | 1.30 | 1.30 |

| Step 2 | | |
|---|---|---|
| Sulphur | 1.45 | 1.45 |
| Accelerant 1 | 1.45 | 1.45 |
| Accelerant 2 | 0.20 | 0.20 |

| | | |
|---|---|---|
| (*): comparison (**): polymers extended with 37.5 phr of oil per 100 phr of dry elastomeric polymer | | |

- BR:: butadiene rubber, CB 29 MES, product from Lanxess
- NR:: natural rubber, STR 20
- SBR: styrene-butadiene rubber, SLR 4630, product from Styron
- CB:: carbon black N234, product from Columbian
- Silica:: Silica Ultrasil 7000 GR, product from Evonik Rice Husk Ash (RHA), product from Curti Riso
- Accelerant 1:: CBS, product from Lanxess
- Accelerant 2:: DPG 80, product from Rhein-Chemie
- Antioxidant:: 6PPD, N-(1,3-dimethylbutyl)-N'-phenyl-p-phenylenediamine, product from Flexsys
- Wax:: product from Repsol
- Sulphur:: product from Zolfoindustria
- Adhesive resin 1:: aliphatic adhesive resin, product from Eastman
- Adhesive resin 2:: octylphenolic adhesive resin, product from SI Group
- Stearic acid:: product from Undesa
- Zinc oxide:: product from Rhein-Chemie
- Silane:: SI 69, product from Evonik

The static and dynamic mechanical properties, as well as hardness IRHD and DIN abrasion, were measured on samples 3 and 4 as described in example 1. The results obtained are shown in Table 4.

According to standard ISO 37:2005, measurements were carried out at different elongations (100%, 300%) on samples of the aforementioned elastomeric materials, vulcanized at 170°C for 10 minutes. The tensile tests were carried out on ring specimens. The results obtained are shown in Table 4, where the values have been normalized to the comparison sample 3.

**TABLE 4**

| SAMPLE | 3 (*) | 4 |
|---|---|---|
| STATIC MECHANICAL PROPERTIES | | |

| Modulus 100% (MPa) | 100 | 117 |
|---|---|---|
| Modulus 300% (MPa) | 100 | 106 |

| HARDNESS | | |
|---|---|---|
| IRHD at -10°C | 100 | 104 |
| IRHD at 0°C | 100 | 105 |

| DYNAMIC MECHANICAL PROPERTIES | | |
|---|---|---|
| E' (-10°C) | 100 | 107 |
| E' (0°C) | 100 | 104 |
| Tan delta (-10°C) | 100 | 102 |
| Tan delta (0°C) | 100 | 97 |
| DIN abrasion (0.5 N) | 100 | 104 |

| | | |
|---|---|---|
| (*): comparison | | |

Again in this example, compound 4 of the invention had a higher hardness value (IRHD), measured both at 0°C and at -10°C, than comparison sample 3.

As noted above, apparently this seemed disadvantageous since it is known that a compound suitable for tyres for use on ice must be as soft as possible. It was also confirmed in this case that, surprisingly, the increase in hardness (IRHD) of the compound was reflected in a reinforcing effect for the finished tyre, without adversely affecting tyre performance on ice.

The hysteresis (measured with tan delta) of sample 4 was higher than for the comparison, especially at the lower temperature, relating to behaviour on ice.

The DIN abrasion value, taking into account the variability of the measurement (±10%), was considered equivalent.

### ROAD TESTING

Table 5 below gives the results of comparative tests of traction and braking (results normalized to the comparison sample) carried out on tyres with a tread made with the tread compounds described in examples 1 and 2 and shown in Tables 1 and 3 respectively.

A front-wheel drive Ford Focus^{®} 2.0 with load distribution: 860 kg front, 550 kg rear, equipped with Pirelli-Ice Control^{®} 205/55 R16 tyres, was used for the tests.

The tests for braking and traction on ice were carried out on different days at a temperature of -3°C with the tyres sample 1 (comparison) and 2 (invention) and a temperature of -9°C with the tyres sample 3 (comparison) and 4 (invention) at relative humidity of 90%.

### Braking on ice

The braking test was performed on icy roads, accelerating the vehicle to a speed of 18 km/h and then braking with the emergency brake. The measurements of deceleration and speed were performed between 15 km/h and 5 km/h and the average deceleration between 15 km/h and 5 km/h was calculated.

### Traction on ice

The traction test was carried out on icy roads with start from stationary, vehicle in first gear, constant engine revolutions 2500 rpm, measuring the maximum acceleration and average acceleration between 5% and 50% of wheelspin.

### Handling on ice

For the tyres with tread made with the sample compounds of example 2 - tyres 3* (comparison) and 4 (invention) - the tester expressed a judgement on perceived handling in driving with values from 4 (minimum handling) to 8 (maximum handling)

**TABLE 5**

| SAMPLE | 1 (*) | 2 | 3 (*) | 4 |
|---|---|---|---|---|
| ROAD TESTING | | | | |
| Braking on ice | 100 | 104 | 100 | 101.4 |
| Traction on ice | 100 | 102 | 100 | 102.9 |
| Handling on ice | - | - | 5 | 6 |

| | | | | |
|---|---|---|---|---|
| (*) comparison | | | | |

The values for braking and traction on ice were improved: the braking distances were in fact reduced for the tyres made with the tread compounds of samples 2 and 4 comprising a finite number of coarse particles of rice husk ash and the tyres sample 2 and 4 showed more grip in acceleration compared to comparison samples 1 and 3.

Finally, the values for handling on ice, measured subjectively by a professional tester, showed better behaviour of the car equipped with the tyres according to the invention both in a straight line and in changes of direction.

## Claims

1. A tyre for vehicle wheels, comprising:
- a tread band (7) applied in a radially outer position;
wherein said tread band (7) comprises a crosslinked elastomeric composition comprising particles of rice husk ash and/or of silica from rice husk ash having maximum size greater than 10 µm and surface distribution greater than 10 particles per mm² of solid surface of tread band.

2. The tyre according to claim 1, wherein the surface distribution of said particles of rice husk ash and/or of silica from rice husk ash having maximum size greater than 10 µm is greater than 20 particles per mm² of solid surface of tread band.

3. The tyre according to claim 2, wherein said particles of rice husk ash and/or of silica from rice husk ash have maximum size greater than 10 µm and less than or equal to 100 µm.

4. The tyre according to claim 1, wherein the surface distribution of said particles of rice husk ash and/or of silica from rice husk ash having maximum size greater than 10 µm is greater than 30 particles per mm² of solid surface of tread band.

5. The tyre according to claim 4, wherein said particles of rice husk ash and/or of silica from rice husk ash have maximum size greater than 10 µm and less than or equal to 100 µm.

6. The tyre according to claim 1, wherein the surface distribution of said particles of rice husk ash and/or of silica from rice husk ash having maximum size greater than 20 µm is greater than 10 particles per mm² of solid surface of tread band.

7. The tyre according to claim 6, wherein said particles of rice husk ash and/or of silica from rice husk ash have maximum size greater than 20 µm and less than or equal to 100 µm.

8. The tyre according to claim 1, wherein the surface distribution of said particles of rice husk ash and/or of silica from rice husk ash having maximum size greater than 20 µm is greater than 15 particles per mm² of solid surface of tread band.

9. The tyre according to claim 8, wherein said particles of rice husk ash and/or of silica from rice husk ash have maximum size greater than 20 µm and less than or equal to 100 µm.

10. The tyre according to anyone of the preceding claims from 1 to 9, wherein said elastomeric composition comprises rice husk ash and/or of silica from rice husk ash in amount greater than 5 phr.

11. The tyre according to claim 10, wherein said elastomeric composition comprises rice husk ash and/or of silica from rice husk ash in amount greater than 8 phr.

12. The tyre according to anyone of the preceding claims from 1 to 11, wherein said elastomeric composition comprises rice husk ash and/or of silica from rice husk ash in amount of less than 40 phr.

13. The tyre according to claim 12, wherein said elastomeric composition comprises rice husk ash and/or of silica from rice husk ash in amount of less than 20 phr.

14. The tyre according to anyone of the preceding claims from 1 to 13, wherein said elastomeric composition comprises rice husk ash and/or of silica from rice husk ash in amount from 10 phr to 15 phr.

15. The tyre according to anyone of the preceding claims from 1 to 14, wherein said crosslinked elastomeric composition is obtained by crosslinking an elastomeric material comprising at least:
(a) an amount greater than or equal to 30 phr of an elastomeric polymer selected from natural rubber, polybutadiene, polyisoprene, polychloroprene, polynorbornene, isoprene-isobutene copolymers optionally halogenated, butadiene-acrylonitrile copolymers, styrene-butadiene-isoprene terpolymers and ethylene-propylene-diene terpolymers, and
(b) at least 30 phr of at least a 1,3-butadiene homopolymer (BR) (which is indicated also as "polybutadiene" or "1,4-polybutadiene").

16. The tyre according to claim 15, wherein said elastomeric material comprises at least:
(a) an amount between about 30 phr and about 70 phr of said elastomeric polymer.

17. The tyre according to claim 15, wherein said elastomeric material comprises at least:
(b) an amount between about 30 phr and about 60 phr of said 1,3-butadiene homopolymer.

18. The tyre according to anyone of claims from 15 to 17, wherein said elastomeric material further comprises:
(c) not more than 20 phr of at least one styrene/1,3-butadiene copolymer (SBR).

## Patentansprüche

1. Reifen für Fahrzeugräder, der umfasst:
- einen Laufflächenring (7), der in einer radial äußeren Stellung angelegt ist;
wobei der Laufflächenring (7) eine vernetzte Elastomerzusammensetzung umfasst, die Partikel aus Reisschalenasche und/oder aus Silikagel aus Reisschalenasche mit einer maximalen Größe von mehr als 10 µm und einer Oberflächenverteilung von mehr als 10 Partikel pro mm² fester Oberfläche des Laufflächenrings umfasst.

2. Reifen nach Anspruch 1, wobei die Oberflächenverteilung der Partikel aus Reisschalenasche und/oder aus Silikagel aus Reisschalenasche mit einer maximalen Größe von mehr als 10 µm mehr als 20 Partikel pro mm² fester Oberfläche des Laufflächenrings beträgt.

3. Reifen nach Anspruch 2, wobei die Partikel aus Reisschalenasche und/oder aus Silikagel aus Reisschalenasche eine maximale Größe von mehr als 10 µm und weniger als oder gleich 100 µm aufweist.

4. Reifen nach Anspruch 1, wobei die Oberflächenverteilung der Partikel aus Reisschalenasche und/oder aus Silikagel aus Reisschalenasche mit einer maximalen Größe von mehr als 10 µm mehr als 30 Partikel pro mm² fester Oberfläche des Laufflächenrings beträgt.

5. Reifen nach Anspruch 4, wobei die Partikel aus Reisschalenasche und/oder aus Silikagel aus Reisschalenasche eine maximale Größe von mehr als 10 µm und weniger als oder gleich 100 µm aufweisen.

6. Reifen nach Anspruch 1, wobei die Oberflächenverteilung der Partikel aus Reisschalenasche und/oder aus Silikagel aus Reisschalenasche mit einer maximalen Größe von mehr als 20 µm mehr als 10 Partikel pro mm² fester Oberfläche des Laufflächenrings beträgt.

7. Reifen nach Anspruch 6, wobei die Partikel aus Reisschalenasche und/oder aus Silikagel aus Reisschalenasche eine maximale Größe von mehr als 20 µm und weniger als oder gleich 100 µm aufweisen.

8. Reifen nach Anspruch 1, wobei die Oberflächenverteilung der Partikel aus Reisschalenasche und/oder aus Silikagel aus Reisschalenasche mit einer maximalen Größe von mehr als 20 µm mehr als 15 Partikel pro mm² fester Oberfläche des Laufflächenrings beträgt.

9. Reifen nach Anspruch 8, wobei die Partikel aus Reisschalenasche und/oder aus Silikagel aus Reisschalenasche eine maximale Größe von mehr als 20 µm und weniger als oder gleich 100 µm aufweisen.

10. Reifen nach einem der vorhergehenden Ansprüche von 1 bis 9, wobei die Elastomerzusammensetzung Reisschalenasche und/oder Silikagel aus Reisschalenasche in einer Menge von mehr als 5 phr umfasst.

11. Reifen nach Anspruch 10, wobei die Elastomerzusammensetzung Reisschalenasche und/oder Silikagel aus Reisschalenasche in einer Menge von mehr als 8 phr umfasst.

12. Reifen nach einem der vorhergehenden Ansprüche von 1 bis 11, wobei die Elastomerzusammensetzung Reisschalenasche und/oder Silikagel aus Reisschalenasche in einer Menge von weniger als 40 phr umfasst.

13. Reifen nach Anspruch 12, wobei die Elastomerzusammensetzung Reisschalenasche und/oder Silikagel aus Reisschalenasche in einer Menge von weniger als 20 phr umfasst.

14. Reifen nach einem der vorhergehenden Ansprüche von 1 bis 13, wobei die Elastomerzusammensetzung Reisschalenasche und/oder Silikagel aus Reisschalenasche in einer Menge von 10 phr bis 15 phr umfasst.

15. Reifen nach einem der vorhergehenden Ansprüche von 1 bis 14, wobei die vernetzte Elastomerzusammensetzung durch Vernetzen eines Elastomermaterials erhalten wird, das zumindest Folgendes umfasst:
(a) eine Menge von mehr als oder gleich 30 phr eines elastomeren Polymers, ausgewählt aus Naturkautschuk, Polybutadien, Polyisopren, Polychloropren, Polynorbornen, Isopren-Isobuten-Copolymeren, die optional halogeniert sind, Butadien-Acrylnitril-Copolymeren, Styrol-Butadien-Isopren-Terpolymeren und Ethylen-Propylen-Dien-Terpolymere, und
(b) zumindest 30 phr von zumindest einem 1,3-Butadien-Homopolymer (BR) (das auch als "Polybutadien" oder "1,4-Polybutadien" bezeichnet wird).

16. Reifen nach Anspruch 15, wobei das Elastomermaterial zumindest Folgendes umfasst:
(a) eine Menge von zwischen etwa 30 phr und etwa 70 phr des elastomeren Polymers.

17. Reifen nach Anspruch 15, wobei das Elastomermaterial zumindest Folgendes umfasst:
(a) eine Menge von zwischen etwa 30 phr und etwa 60 phr des 1,3-Butadien-Homopolymers.

18. Reifen nach einem der Ansprüche von 15 bis 17, wobei das Elastomermaterial des Weiteren umfasst:
(c) nicht mehr als 20 phr zumindest eines Styrol-1,3-Butadien-Copolymers (SBR).

## Revendications

1. Pneu pour roues de véhicule, comprenant :
- une bande de roulement (7) appliquée dans une position radialement extérieure ;
dans lequel ladite bande de roulement (7) comprend une composition élastomère réticulée comprenant des particules de cendre de balle de riz et/ou de silice provenant de la cendre de balle de riz ayant une taille maximale supérieure à 10 µm et une distribution de surface supérieure à 10 particules par mm² de surface solide de la bande de roulement.

2. Pneu selon la revendication 1, dans lequel la distribution de surface desdites particules de cendre de balle de riz et/ou de silice provenant de la cendre de balle de riz ayant une taille maximale supérieure à 10 µm est supérieure à 20 particules par mm² de surface solide de la bande de roulement.

3. Pneu selon la revendication 2, dans lequel lesdites particules de cendre de balle de riz et/ou de silice provenant de la cendre de balle de riz ont une taille maximale supérieure à 10 µm et inférieure ou égale à 100 µm.

4. Pneu selon la revendication 1, dans lequel la distribution de surface desdites particules de cendre de balle de riz et/ou de silice provenant de la cendre de balle de riz ayant une taille maximale supérieure à 10 µm est supérieure à 30 particules par mm² de surface solide de la bande de roulement.

5. Pneu selon la revendication 4, dans lequel lesdites particules de cendre de balle de riz et/ou de silice provenant de la cendre de balle de riz ont une taille maximale supérieure à 10 µm et inférieure ou égale à 100 µm.

6. Pneu selon la revendication 1, dans lequel la distribution de surface desdites particules de cendre de balle de riz et/ou de silice provenant de la cendre de balle de riz ont une taille maximale supérieure à 20 µm est supérieure à 10 particules par mm² de surface solide de la bande de roulement.

7. Pneu selon la revendication 6, dans lequel lesdites particules de cendre de balle de riz et/ou de silice provenant de la cendre de balle de riz ont une taille maximale supérieure à 20 µm et inférieure ou égale à 100 µm.

8. Pneu selon la revendication 1, dans lequel la distribution de surface desdites particules de cendre de balle de riz et/ou de silice provenant de la cendre de balle de riz ayant une taille maximale supérieure à 20 µm est supérieure à 15 particules par mm² de surface solide de la bande de roulement.

9. Pneu selon la revendication 8, dans lequel lesdites particules de cendre de balle de riz et/ou de silice provenant de la cendre de balle de riz ont une taille maximale supérieure à 20 µm et inférieure ou égale à 100 µm.

10. Pneu selon l'une quelconque des revendications précédentes 1 à 9, dans lequel ladite composition élastomère comprend la cendre de balle de riz et/ou de la silice provenant de la cendre de balle de riz en une quantité supérieure à 5 phr.

11. Pneu selon la revendication 10, dans lequel ladite composition élastomère comprend la cendre de balle de riz et/ou de la silice provenant de la cendre de balle de riz en une quantité supérieure à 8 phr.

12. Pneu selon l'une quelconque des revendications précédentes 1 à 11, dans lequel ladite composition élastomère comprend la cendre de balle de riz et/ou de la silice provenant de la cendre de balle de riz en une quantité inférieure à 40 phr.

13. Pneu selon la revendication 12, dans lequel ladite composition élastomère comprend la cendre de balle de riz et/ou de la silice provenant de la cendre de balle de riz en une quantité inférieure à 20 phr.

14. Pneu selon l'une quelconque des revendications précédentes 1 à 13, dans lequel ladite composition élastomère comprend la cendre de balle de riz et/ou de la silice provenant de la cendre de balle de riz en une quantité allant de 10 phr à 15 phr.

15. Pneu selon l'une quelconque des revendications précédentes 1 à 14, dans lequel ladite composition élastomère réticulée est obtenue par réticulation d'un matériau élastomère comprenant au moins :
(a) une quantité supérieure ou égale à 30 phr d'un polymère élastomère choisi dans le groupe constitué de caoutchouc naturel, de polybutadiène, de polyisoprène, de polychloroprène, de polynorbornène, de copolymères d'isoprène/isobutène éventuellement halogénés, de copolymères de butadiène/acrylonitrile, de terpolymères de styrène/butadiène/isoprène et de terpolymères d'éthylène/propylène/diène, et
(b) au moins 30 phr d'au moins un homopolymère de 1,3-butadiène (BR) (qui est également indiqué par « polybutadiène » ou « 1,4-polybutadiène »).

16. Pneu selon la revendication 15, dans lequel ledit matériau élastomère comprend au moins :
(a) une quantité comprise entre environ 30 phr et environ 70 phr dudit polymère élastomère.

17. Pneu selon la revendication 15, dans lequel ledit matériau élastomère comprend au moins :
(b) une quantité comprise entre environ 30 phr et environ 60 phr dudit homopolymère de 1,3-butadiène.

18. Pneu selon l'une quelconque des revendications 15 à 17, dans lequel ledit matériau élastomère comprend en outre :
(c) au plus 20 phr d'au moins un copolymère de styrène/1,3-butadiène (SBR).
